# EUROPEAN PATENT APPLICATION

(11) **EP 4 102 251 A1**
(43) Date of publication of application: **14.12.2022**
(21) Application number: 22175897.2
(22) Date of filing: 27.05.2022
(51) Int. Cl.: G01S 7/497, G01S 7/48, G01S 17/931, G01S 7/40, G01S 17/42, G01S 13/931, G01S 17/933, G01S 7/41

(54) **DETERMINATION OF ATMOSPHERIC VISIBILITY IN AUTONOMOUS VEHICLE APPLICATIONS**

(30) Priority: 07.06.2021 US 202117303770
(71) Applicant: Waymo LLC, Mountain View, CA 94043 (US)
(72) Inventor: WANG, Yuchi, Mountain View, 94043 (US); WU, Rui, Mountain View, 94043 (US); ZHANG, Jingyuan Linda, Mountain View, 94043 (US)
(74) Representative: Derry, Paul Stefan

(57) **Abstract**

Aspects and implementations of the present disclosure address challenges of the existing technology by enabling lidar-assisted identification and characterization of visibility-reducing media (VRM) such as fog, rain, snow, dust in autonomous vehicle applications, using lidar sensing. VRM can be identified and characterized using a variety of techniques, including analyzing a spatial distribution of low-intensity lidar returns, detecting pulse elongation of VRM-returns associated with reflection from VRM, determining intensity of VRM-returns, determining reduction of intensity of returns from various reference objects, and other techniques.

## Description

### TECHNICAL FIELD

The instant specification generally relates to autonomous vehicles. More specifically, the instant specification relates to improving autonomous driving systems and components using light detection and ranging data to assist in identification of visibility-reducing media in autonomous driving environments.

### BACKGROUND

An autonomous (fully and partially self-driving) vehicle (AV) operates by sensing an outside environment with various electromagnetic (e.g., radar and optical) and non-electromagnetic (e.g., audio and humidity) sensors. Some autonomous vehicles chart a driving path through the environment based on the sensed data. The driving path can be determined based on positioning (e.g., Global Positioning System (GPS)) and road map data. While the positioning and the road map data can provide information about static aspects of the environment (buildings, street layouts, etc.), dynamic information (such as information about other vehicles, pedestrians, cyclists, etc.) is obtained from contemporaneously collected sensing data. Precision and safety of the driving path and of the speed regime selected by the autonomous vehicle depend on the quality of the sensing data and on the ability of autonomous driving computing systems to process the sensing data and to provide appropriate instructions to the vehicle controls and the drivetrain.

### BRIEF DESCRIPTION OF THE DRAWINGS

The present disclosure is illustrated by way of examples, and not by way of limitation, and can be more fully understood with references to the following detailed description when considered in connection with the figures, in which:
**FIG. 1A** is a diagram illustrating components of an example autonomous vehicle that uses lidar sensing technology for identification of visibility-reducing media in autonomous driving applications, in accordance with some implementations of the present disclosure.
**FIG. 1B** is a diagram illustrating example architecture of a part of a perception system of the autonomous vehicle of **FIG. 1A** that uses lidar sensing technology for identification of characterization of a visibility-reducing medium for autonomous driving applications, in accordance with some implementations of the present disclosure.
**FIG. 2** is an illustration of a lidar-assisted identification of the presence of a visibility-limiting medium in autonomous driving applications, in accordance with some implementations of the present disclosure.
**FIGs 3A** and **3B** illustrate schematically lidar-assisted identification and characterization of visibility-reducing media for autonomous driving applications, in accordance with some implementations of the present disclosure. **FIG. 3A** illustrates a forward view from a lidar sensor. **FIG. 3B** illustrates a rearward view from the lidar sensor.
**FIGs 4A** and **4B** illustrate schematically identification and characterization of visibility-reducing media based on reflections from reference objects, in accordance with some implementations of the present disclosure. **FIG. 4A** depicts road signs that can be used as reference objects in highway settings. **FIG. 4B** depicts a stop sign, a speed limit sign, and street lights that can be used as reference objects in urban as well as highway settings.
**FIG. 5** depicts a flow diagram of an example method of a lidar-assisted identification and characterization of visibility-reducing media (VRM) using VRM-reflected returns, in accordance with some implementations of the present disclosure.
**FIG. 6** depicts a flow diagram of an example method of lidar-assisted identification and characterization of visibility-reducing media using object-reflected returns, in accordance with some implementations of the present disclosure.
**FIG. 7** depicts a block diagram of an example computer device capable of enabling lidar-assisted identification and characterization of VRM, in accordance with some implementations of the present disclosure.

### SUMMARY

In one implementation, disclosed is a method of obtaining, using a sensing system of an autonomous vehicle (AV), a plurality of return points, wherein each of the plurality of return points comprises i) a direction of a respective sensing signal emitted by the sensing system and reflected by an outside environment, and ii) a reflected intensity of the respective sensing signal; detecting presence of a visibility-reducing medium (VRM) in the outside environment based on a first set of return points of the plurality of return points, the reflected intensity of each of the first set of return points being lower than a threshold intensity; and determining, based on a second set of return points of the plurality of return points, one or more characteristics of the VRM.

In one implementation, disclosed is a method of obtaining, using a sensing system of an autonomous vehicle (AV), a plurality of return points, wherein each of the plurality of return points comprises i) a direction of a respective sensing signal emitted by the sensing system and reflected by an outside environment, and ii) a reflected intensity of the respective sensing signal; identifying that a subset of the plurality of return points is associated with a reference object; obtaining a reference intensity value for the reference object; and determining one or more characteristics of a VRM in the outside environment, based on a reduction, compared with the reference intensity value, of the reflected intensity of each return point of the identified subset of the plurality of return points.

In another implementation, disclosed is a system that includes a sensing system of an autonomous vehicle (AV), the sensing system to obtain a plurality of return points, wherein each of the plurality of return points comprises i) a direction of a respective sensing signal emitted by the sensing system and reflected by an outside environment, and ii) a reflected intensity of the respective sensing signal. The disclosed system further includes a perception system of the AV, the perception system to detect presence of a VRM in the outside environment based on a first set of return points of the plurality of return points, the reflected intensity of each of the first set of return points being lower than a threshold intensity; and determine, based on a second set of return points of the plurality of return points, one or more characteristics of the VRM.

### DETAILED DESCRIPTION

An autonomous vehicle (AV) can employ a light detection and ranging (lidar) technology to detect distances to various objects in the driving environment and, sometimes, the velocities of such objects. A lidar emits one or more laser signals (pulses) that travel to an object and then detects arrived signals reflected from the object. By determining a time delay between the signal emission and the arrival of the reflected waves, a time-of-flight (ToF) lidar can determine the distance to the object. A typical lidar emits signals along multiple directions to obtain a wide view of the outside environment. For example, a lidar device can cover an entire 360-degree view by scanning to collect a series of consecutive sensing frames identified with timestamps. As a result, each sector in space is sensed in time increments *Δτ*, which are determined by the angular velocity of the lidar's scanning speed. "Frame" or "sensing frame," as used herein, can refer to an entire 360-degree view of the environment obtained over a scan of the lidar or, alternatively, to any smaller sector, e.g., a 1-degree, 5-degree, a 10-degree, or any other angle obtained over a fraction of the scan cycle (e.g., a revolution), or over a scan designed to cover a limited angle.

Each frame can include numerous return points (or simply "points") corresponding to reflections from various objects of the environment. Each point can be associated with the distance to the corresponding object or, more specifically, with the distance to an element of the reflective surface of the object (reflecting region) responsible for the respective return point. A set of points can be rendered or otherwise associated with a frame and is sometimes referred to as a "point cloud." A point cloud can include returns from multiple objects. Typically, it is not known *a priori* how many objects are within a given frame. A single object, such as another vehicle, a road sign, a pedestrian, and so on, can generate multiple return points. For example, a 10-degree frame (or portion of a frame) can include returns from one or more road signs, multiple vehicles located at various distances from the lidar device (which can be mounted on the AV) and moving with different speeds in different directions, pedestrians crossing a roadway, walking along a sidewalk, or standing by the roadside, and/or many other objects. Accurate segmentation of a point cloud into clusters associated with different objects (as performed by a perception system of the AV) is an important part of AV vision that improves safety of autonomous driving.

Visibility-reducing media (VRM), which can be present in the driving environment, can pose additional challenges. VRM can be or include fog, rain, snow, dust (e.g., caused by a dust storm), smoke (from wildfires), or any other medium having liquid or solid particles that can be present in the atmosphere, e.g., as a result of various natural or artificial (e.g., technological or other human-caused) conditions. VRM reduces the visibility range at which lidars (radars, cameras, etc.) can reliably detect objects. Additionally, VRM limits visibility (especially in foggy or dusty driving environments or when driving through a sandstorm in a desert) of other, e.g., driver-operated, vehicles. As a result, AV's cameras can provide images of reduced quality and depth of perception. Without independent information ("ground truth") about VRM causing such a reduction in perception, a response of the AV to the current environmental conditions can be sub-optimal. Conversely, possessing such a ground truth about the current visibility conditions, the AV can identify that the reduced perception is due to environmental conditions (rather than due to malfunctioning of the AV's sensing system), and can more accurately predict driving patterns of other vehicles, more reliably estimate road conditions (e.g., slippery vs. dry), and so on.

Aspects and implementations of the present disclosure address these and other problems by enabling lidar-assisted (or radar-assisted) detection and characterization of VRM. In some implementations, detection of VRM can be performed by observing reflected lidar (or radar) signals that have increased duration (often referred to as elongation), as compared with the duration of the transmitted signals (e.g., pulses). Such a pulse elongation is caused by multiple albeit low intensity (herein, intensity refers to energy flux per unit area) returns from numerous particles of VRM encountered along the optical path of the lidar beam. Unlike sharp returns from hard objects, which have well-defined ToFs, elongated returns from VRM are characterized by a distribution of multiple (continuous) reflections over a broader range of ToFs. In addition, since VRM is typically present in the entire environment of the AV (e.g., a fog surrounds the AV), detection of VRM can be performed by identifying multiple low-intensity returns with similar reflected intensities arriving from various directions.

In addition to detection of a VRM, a more detailed characterization of VRM can also be obtained. In one example, the perception system of the AV can identify those returns that are associated with free-space beam propagation (rather than with reflections from hard objects) and determine a density of VRM based on such returns. In another example, the perception system of the AV can identify those returns that correspond to reference objects with known properties. By detecting and measuring a decrease in the strength of the reflected sensing signals, the perception system of the AV can determine the density of the VRM. The reference objects can be road signs, mileposts, highway reflectors, traffic lights, and various other objects that have standardized shapes and surfaces. The determined density of the VRM can further be used to estimate visibility range of the perception system of the AV.

Advantages of the disclosed implementations include but are not limited to quick detection of the existence of visibility-limiting environmental conditions and accurate characterization of such environmental conditions for improved safety and efficiency of autonomous driving applications.

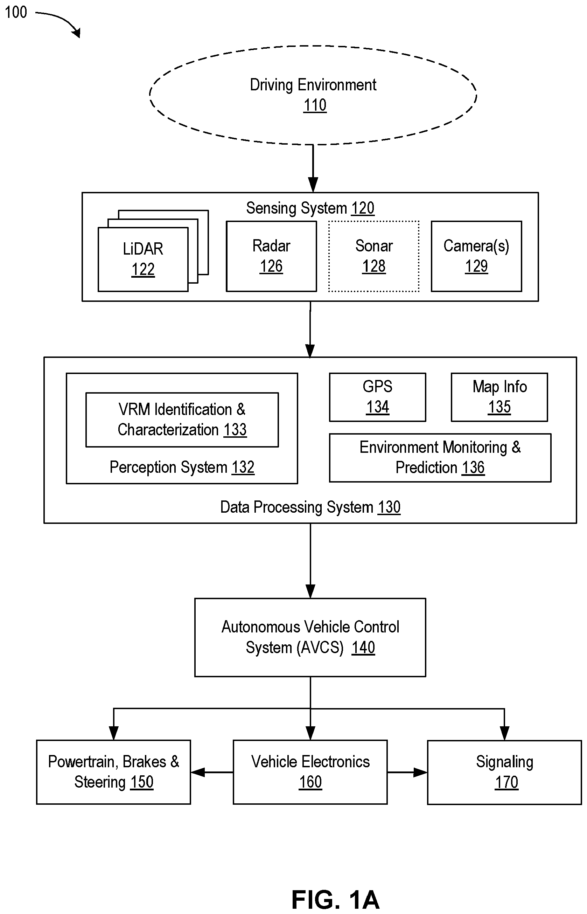

**FIG. 1A** is a diagram illustrating components of an example autonomous vehicle (AV) 100 that uses lidar sensing technology for identification of visibility-reducing media (VRM) in autonomous driving applications, in accordance with some implementations of the present disclosure. Autonomous vehicles can include motor vehicles (cars, trucks, buses, motorcycles, all-terrain vehicles, recreational vehicle, any specialized farming or construction vehicles, and the like), aircraft (planes, helicopters, drones, and the like), naval vehicles (ships, boats, yachts, submarines, and the like), or any other self-propelled vehicles (e.g., sidewalk delivery robotic vehicles) capable of being operated in a self-driving mode (without a human input or with a reduced human input).

A driving environment 110 can include any objects (animated or unanimated) located outside the AV, such as roadways, buildings, trees, bushes, sidewalks, bridges, overpasses, underpasses, tunnels, construction zones, parking features, other vehicles, pedestrians, cyclists, and so on. The driving environment 110 can be urban, suburban, rural, and so on. In some implementations, the driving environment 110 can be an off-road environment (e.g. farming or agricultural land). In some implementations, the driving environment can be an indoor environment, e.g., the environment of an industrial plant, a shipping warehouse, a hazardous area of a building, and so on. In some implementations, the driving environment 110 can be substantially flat, with various objects moving parallel to a surface (e.g., parallel to the surface of Earth). In other implementations, the driving environment can be three-dimensional and can include objects that are capable of moving along all three directions (e.g., balloons, leaves, etc.). Hereinafter, the term "driving environment" should be understood to include all environments in which an autonomous motion of self-propelled vehicles can occur. For example, "driving environment" can include any possible flying environment of an aircraft or a marine environment of a naval vessel. The objects of the driving environment 110 can be located at any distance from the AV, from close distances of several feet (or less) to several miles (or more).

The example AV 100 can include a sensing system 120. The sensing system 120 can include various electromagnetic (e.g., optical) and non-electromagnetic (e.g., acoustic) sensing subsystems and/or devices. The terms "optical" and "light," as referenced throughout this disclosure, are to be understood to encompass any electromagnetic radiation (waves) that can be used in object sensing to facilitate autonomous driving, e.g., distance sensing, velocity sensing, acceleration sensing, rotational motion sensing, and so on. For example, "optical" sensing can utilize a range of light visible to a human eye (e.g., the 380 to 700 nm wavelength range), the UV range (below 380 nm), the infrared range (above 700 nm), the radio frequency range (above 1 m), etc. In implementations, "optical" and "light" can include any other suitable range of the electromagnetic spectrum.

The sensing system 120 can include a radar unit 126, which can be any system that utilizes radio or microwave frequency signals to sense objects within the driving environment 110 of the AV 100. The radar unit can be configured to sense both the spatial locations of the objects (including their spatial dimensions) and their velocities (e.g., using the Doppler shift technology), including angular velocities. Hereinafter, "velocity" refers to both how fast the object is moving (the speed of the object) as well as the direction of the object's motion.

The sensing system 120 can include one or more lidar sensors 122 (e.g., lidar rangefinders), which can be a laser-based unit capable of determining distances (e.g., using ToF technology) to the objects in the driving environment 110. The lidar sensor(s) can utilize wavelengths of electromagnetic waves that are shorter than the wavelength of the radio waves and can, therefore, provide a higher spatial resolution and sensitivity compared with the radar unit. The lidar sensor(s) can include a coherent lidar sensor, such as a frequency-modulated continuous-wave (FMCW) lidar sensor. The lidar sensor(s) can use optical heterodyne detection for velocity determination. In some implementations, the functionality of a ToF and coherent lidar sensor(s) is combined into a single (e.g., hybrid) unit capable of determining both the distance to and the radial velocity of the reflecting object. Such a hybrid unit can be configured to operate in an incoherent sensing mode (ToF mode) and/or a coherent sensing mode (e.g., a mode that uses heterodyne detection) or both modes at the same time. In some implementations, multiple lidar sensor(s) 122 units can be mounted on AV, e.g., at different locations separated in space, to provide additional information about a transverse component of the velocity of the reflecting object.

The lidar sensor(s) 122 can include one or more laser sources producing and emitting signals and one or more detectors of the signals reflected back from the objects. The lidar sensor(s) 122 can include spectral filters to filter out spurious electromagnetic waves having wavelengths (frequencies) that are different from the wavelengths (frequencies) of the emitted signals. In some implementations, the lidar sensor(s) 122 can include directional filters (e.g., apertures, diffraction gratings, and so on) to filter out electromagnetic waves that can arrive at the detectors along directions different from the directions of the emitted signals. The lidar sensor(s) 122 can use various other optical components (lenses, mirrors, gratings, optical films, interferometers, spectrometers, local oscillators, and the like) to enhance sensing capabilities of the sensors.

In some implementations, the lidar sensor(s) 122 scan a 360-degree panoramic view around the AV (e.g., in a horizontal direction). In some implementations, the lidar sensor(s) 122 can be capable of spatial scanning along both the horizontal and vertical directions. In some implementations, the field of view can be up to 90 degrees in the vertical direction (e.g., such that at least a part of the region above the horizon can be scanned by the lidar signals or at least part of the region below the horizon is scanned by the lidar signals). In some implementations, e.g., those involving aeronautical applications, the field of view can be a full sphere (consisting of two hemispheres). For brevity and conciseness, when a reference to "lidar technology," "lidar sensing," "lidar data," and "lidar," in general, is made in the present disclosure, such reference shall be understood also to encompass other sensing technology that operates generally in the near-infrared domain, but can include sensing technology that operates at other wavelengths.

The sensing system 120 can further include one or more cameras 129 to capture images of the driving environment 110. The images can be two-dimensional projections of the driving environment 110 (or parts of the driving environment 110) onto a projecting plane (flat or non-flat, e.g. fisheye) of the camera(s) 129. Some of the cameras 129 of the sensing system 120 can be video cameras configured to capture a continuous (or quasi-continuous) stream of images of the driving environment 110. The sensing system 120 can also include one or more sonars 128, which can be ultrasonic sonars, in some implementations.

The sensing data obtained by the sensing system 120 can be processed by a data processing system 130 of AV 100. For example, the data processing system 130 can include a perception system 132. The perception system 132 can be configured to detect and track objects in the driving environment 110 and to recognize the detected objects. For example, the perception system 132 can analyze images captured by the camera(s) 129 and can be capable of detecting traffic light signals, road signs, roadway layouts (e.g., boundaries of traffic lanes, topologies of intersections, designations of parking places, and so on), presence of obstacles, and the like. The perception system 132 can further receive the lidar sensing data (coherent Doppler data and incoherent ToF data) to determine distances to various objects in the driving environment 110 as well as velocities of such objects. In some implementations, the perception system 132 can use the lidar data in combination with the data captured by the camera(s) 129. In one example, the camera(s) 129 can detect an image of road debris partially obstructing a traffic lane. Using the data from the camera(s) 129, perception system 132 can be capable of determining the angular extent of the debris. Using the lidar data, the perception system 132 can determine the distance from the debris to the AV. By combining the distance information with the angular size of the debris, the perception system 132 can determine the linear dimensions of the debris as well.

In another implementation, using the lidar data, the perception system 132 can determine how far a detected object is from the AV and can further determine the component of the object's velocity along the direction of the AV's motion. Furthermore, using a series of quick images obtained by the camera, the perception system 132 can also determine the lateral velocity of the detected object in a direction perpendicular to the direction of the AV's motion. In some implementations, the lateral velocity can be determined from the lidar data alone, for example, by recognizing an edge of the object (using horizontal scanning) and further determining how quickly the edge of the object is moving in the lateral direction.

Each of the sensor frames can include multiple points. Each point can correspond to a reflection (from VRM or from a solid object) of a sensing signal emitted by the sensing system 120, e.g., by lidar sensor(s) 122, etc. The type and/or nature of the reflecting object can be unknown, e.g., a vehicle, road sign, pedestrian, fog, mist, spray, etc. Each point can be associated with various data, such as a timestamp of the frame, coordinates of the reflecting object, radial velocity of the reflecting object, intensity of the reflected signal (herein referred to as reflected intensity), and so on. The coordinates can be spherical (or cylindrical), in one implementation. For example, coordinates can include the radial distance, the polar angle (the angle the direction to the respective reflecting surface makes with the vertical direction or with the horizontal plane), the azimuthal angle (the angle indicating a direction within the horizontal plane), and so on. The radial distance can be determined from the lidar data whereas the angles can be independently known from a synchronizer data, a clock data, e.g., based on the known lidar scanning frequency within the horizontal plane.

In some implementations, the perception system 132 can include a VRM identification and classification module 133. The VRM identification and classification module 133 can receive one or more sensor data frames from the sensing system 120. The VRM identification and classification module 133 can use one or more algorithms to perform segmentation of points into points associated with VRM reflections and points associated with solid object reflection. The VRM identification and classification module 133 can use both sets of points for characterization of the VRM, as described in more detail below. The lidar-assisted identification and classification of VRM can then be used by the perception system 132 for efficient and reliable detection and tracking of various objects of the driving environment.

The perception system 132 can further receive information from a GPS transceiver (not shown) configured to obtain information about the position of the AV relative to Earth and its surroundings. The positioning data processing module 134 can use the positioning data, e.g., GPS and inertial measurement unit (IMU) data) in conjunction with the sensing data to help accurately determine location of the AV with respect to fixed objects of the driving environment 110, such as roadways, lane boundaries, intersections, sidewalks, crosswalks, road signs, curbs, surrounding buildings, and so on, locations of which can be provided by map information 135. In some implementations, the data processing system 130 can receive non-electromagnetic data, such as audio data (e.g., ultrasonic sensor data, or data from a microphone picking up emergency vehicle sirens), temperature sensor data, humidity sensor data, pressure sensor data, meteorological data (e.g., wind speed and direction, precipitation data), and the like.

The data processing system 130 can further include an environment monitoring and prediction component 136, which can monitor how the driving environment 110 evolves with time, e.g., by keeping track of the locations and velocities of the animated objects (relative to Earth). In some implementations, the environment monitoring and prediction component 136 can keep track of the changing appearance of the environment due to motion of the AV relative to the environment. In some implementations, the environment monitoring and prediction component 136 can make predictions about how various animated objects of the driving environment 110 will be positioned within a prediction time horizon. The predictions can be based on the current locations and velocities of the animated objects as well as on the tracked dynamics of the animated objects during a certain (e.g., predetermined) period of time. For example, based on stored data for object 1 indicating accelerated motion of object 1 during the previous 3-second period of time, the environment monitoring and prediction component 136 can conclude that object 1 is resuming its motion from a stop sign or a red traffic light signal. Accordingly, the environment monitoring and prediction component 136 can predict, given the layout of the roadway and presence of other vehicles, where object 1 is likely to be within the next 3 or 5 seconds of motion. As another example, based on stored data for object 2 indicating decelerated motion of object 2 during the previous 2-second period of time, the environment monitoring and prediction component 136 can conclude that object 2 is stopping at a stop sign or at a red traffic light signal. Accordingly, the environment monitoring and prediction component 136 can predict where object 2 is likely to be within the next 1 or 3 seconds. The environment monitoring and prediction component 136 can perform periodic checks of the accuracy of its predictions and modify the predictions based on new data obtained from the sensing system 120.

The data generated by the perception system 132, by the GPS data processing module 134, and by the environment monitoring and prediction component 136 can be used by an autonomous driving system, such as AV control system (AVCS) 140. The AVCS 140 can include one or more algorithms that control how AV is to behave in various driving situations and environments. For example, the AVCS 140 can include a navigation system for determining a global driving route to a destination point. The AVCS 140 can also include a driving path selection system for selecting a particular path through the immediate driving environment, which can include selecting a traffic lane, negotiating a traffic congestion, choosing a place to make a U-turn, selecting a trajectory for a parking maneuver, and so on. The AVCS 140 can also include an obstacle avoidance system for safe avoidance of various obstructions (rocks, stalled vehicles, a jaywalking pedestrian, and so on) within the driving environment of the AV. The obstacle avoidance system can be configured to evaluate the size of the obstacles and the trajectories of the obstacles (if obstacles are animated) and select an optimal driving strategy (e.g., braking, steering, accelerating, etc.) for avoiding the obstacles.

Algorithms and modules of AVCS 140 can generate instructions for various systems and components of the vehicle, such as the powertrain, brakes, and steering 150, vehicle electronics 160, signaling 170, and other systems and components not explicitly shown in FIG. 1A. The powertrain, brakes, and steering 150 can include an engine (internal combustion engine, electric engine, and so on), transmission, differentials, axles, wheels, steering mechanism, and other systems. The vehicle electronics 160 can include an on-board computer, engine management, ignition, communication systems, carputers, telematics, in-car entertainment systems, and other systems and components. The signaling 170 can include high and low headlights, stopping lights, turning and backing lights, horns and alarms, inside lighting system, dashboard notification system, passenger notification system, radio and wireless network transmission systems, and so on. Some of the instructions output by the AVCS 140 can be delivered directly to the powertrain, brakes, and steering 150 (or signaling 170) whereas other instructions output by the AVCS 140 are first delivered to the vehicle electronics 160, which generate commands to the powertrain, brakes, and steering 150 and/or signaling 170.

In one example, the AVCS 140 can determine that an obstacle identified by the data processing system 130 is to be avoided by decelerating the vehicle until a safe speed is reached, followed by steering the vehicle around the obstacle. The AVCS 140 can output instructions to the powertrain, brakes, and steering 150 (directly or via the vehicle electronics 160) to 1) reduce, by modifying the throttle settings, a flow of fuel to the engine to decrease the engine rpm, 2) downshift, via an automatic transmission, the drivetrain into a lower gear, 3) engage a brake unit to reduce (while acting in concert with the engine and the transmission) the vehicle's speed until a safe speed is reached, and 4) perform, using a power steering mechanism, a steering maneuver until the obstacle is safely bypassed. Subsequently, the AVCS 140 can output instructions to the powertrain, brakes, and steering 150 to resume the previous speed settings of the vehicle.

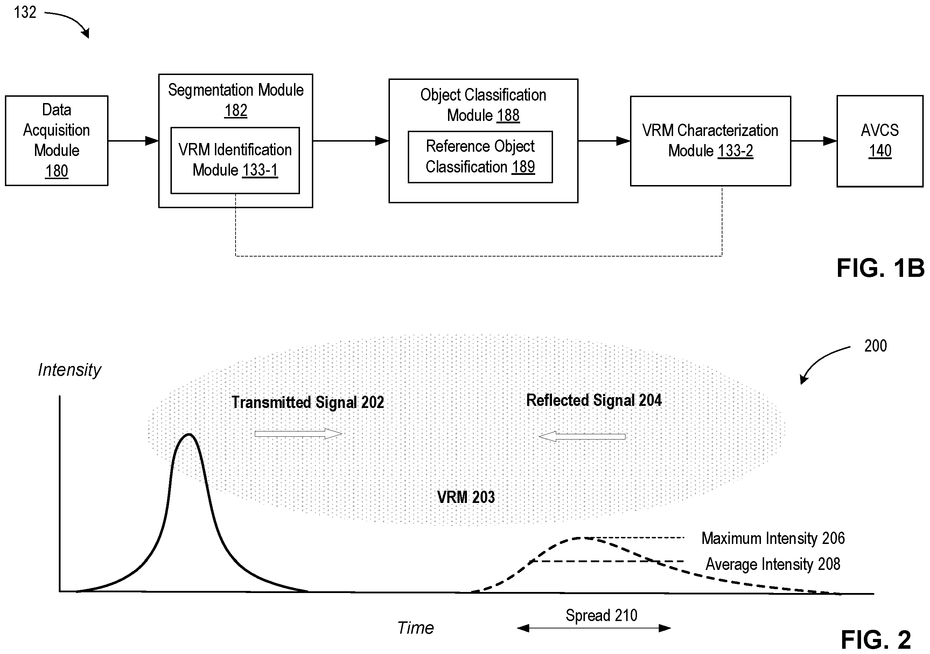

**FIG. 1B** is a diagram illustrating example architecture of a part of a perception system of the autonomous vehicle of **FIG. 1A** that uses lidar sensing technology for identification of characterization of a visibility-reducing medium for autonomous driving applications, in accordance with some implementations of the present disclosure. A perception system illustrated in **FIG. 1A** can be perception system 132, in one implementation. An input into perception system 132 may be data obtained by sensing system 120, including distance data and radial velocity data obtained by lidar sensor(s) 122. For example, a data acquisition module 180 may associate each (return) point with coordinates and radial velocities of the respective reflecting region. Various points may correspond to different frames, each frame having a timestamp. In some implementations, to account for a rolling shutter that outputs sensing signals sequentially around the field of view, data acquisition module 180 may associate an individual time stamp with each point, by modifying a global reference timestamp of the respective frame with a time correction within a given frame. Output of data acquisition module 180 can be a point cloud of return points corresponding to a sensing frame or a portion of a sensing frame. The point cloud can be input into a segmentation module 182 where various points of the point cloud can be grouped into clusters corresponding to different objects, e.g., moving vehicles, stationary objects, VRM, etc. Segmentation can be performed using a variety of approaches. Clusters can be grouped based on proximity of points in space, proximity of radial velocities of various points, or both. In some implementations, segmentation can use various mapping algorithms (such as iterative closest point (ICP) algorithms) that are capable of mapping points of two different sensing frames. Segmentation can involve formation and verification of hypotheses; for example, a hypothesis that a certain cluster corresponds to a single object can be confirmed or disproved based on distribution of measured (radial) velocities of the points in the cluster, on evolution of the cluster between different sensing frames, and/or by other methods and techniques. In some implementations, identification of VRM can be performed by VRM identification module 133-1 that identifies regions of space free from solid objects (where lidar returns occur purely from VRM) as well as regions where lidar returns from VRM overlap with returns from solid objects.

Perception system 132 can also include an object classification module 188 that classifies clusters of points as associated with objects of a particular type, such as cars, trucks, buses motorcycles, bicyclists, pedestrians, stationary objects, and so on. Object classification can be performed using various features of the tracked clusters, such as size, positions, velocity (both rotational and translational), pattern of motion (e.g., how often the object stops, how quickly the object accelerates/decelerates), motion in relation to other objects and so on. Object classification module 188 can include reference object classification module 189 for classification of objects that have standardized reflection properties, which can be used for characterization of VRM, as described in more detail below. Characterization of VRM (e.g., density, visibility, type, etc.) can be performed by a VRM characterization module 133-2, which may operate in conjunction with the VRM identification module 133-1 (as indicated schematically with the dashed line). Data about VRM obtained by VRM characterization module 133-2 can be provided to AVCS 140 that can chart a driving path of the AV based on the provided data. For example, based on the characterization of the identified VRM, the AVCS 140 can choose a different speed regime, modify braking and steering, switch on external lighting devices, and the like. Although not depicted in **FIG 1B** for conciseness, the VRM data obtained by VRM characterization module 133-2 can also be provided to other components of the data processing system 130, e.g., to environment monitoring and prediction component 136, which predicts behavior of other vehicles. The data can also be used in conjunction with sensing data provided by sensing system 120. For example, reduced accuracy of data obtained by lidars 122 and/or cameras 129 in the presence of VRM can be factored in by various algorithms of object identification and tracking of the perception system 132.

**FIG. 2** is an illustration 200 a lidar-assisted identification of the presence of a visibility-limiting medium in autonomous driving applications, in accordance with some implementations of the present disclosure. Shown in **FIG. 2** is a schematic temporal intensity profile of a transmitted signal 202 (e.g., a pulse, a wave packet, or any other signal having a limited duration) output by the sensing system of the AV. Although a single transmitted signal 202 is depicted for brevity, any number of sensing signals can be transmitted. During propagation in VRM 203 (e.g., fog, rain, snow, etc.), a sensing signal encounters numerous particles of the VRM that generate multiple reflected waves adding up to a combined reflected signal 204. Because different parts of the reflected signal 204 are generated at different distances from the lidar transmitter/receiver (transceiver), a temporal spread of the reflected intensity *I_{R}*(*t*) (depicted with the dashed curve) is broader than the spread of the transmitted intensity *I_{T}*(*t*) (depicted with the solid curve). Additionally, because each particle of VRM encountered along the optical path of the sensing signal reflects only a small part of the sensing signal back to the lidar transceiver (with substantial part of the signal scattered into various other direction in space, the reflected signal 204 detected by the lidar transceiver is generally of weaker intensity than a sensing signal reflected from a solid target. For example, the intensity of the reflected signal 204 can be an order or two of magnitude (or even more) weaker than a signal reflected from a solid target. The intensity of the reflected signal 204 can be weaker to a degree that is dependent on (e.g., proportional to) the amount (e.g., density) of the VRM. In some implementations, the reflected intensity *I_{R}*(*t*) can depend in a complex way on various physical and optical properties of the VRM, such as the size of the particles of VRM, absorption cross section of the particle of VRM, scattering cross section of the particles of VRM, and the like. In some implementations, particles of VRM can be modeled as Mie particles.

In some implementations, characterization of the VRM can be performed using the full temporal profile of the reflected intensity *I_{R}*(*t*). In some implementations, the lidar transceiver can use a maximum (peak) intensity *I_{MAX}* 206 and/or an average intensity *I_{AV}* 208, as well as other characteristics of the reflected signal 204, such as its spread *τ* 210 (e.g., a full width or a half-width of the reflected intensity), and the like. The VRM characterization module 133-2 can include VRM modeling component that predicts *I_{R}*(*t*) (or *I_{MAX}*, *I_{AV}*, *τ*, etc.) based on the type of the VRM (e.g., fog or snow), size of the particles, density of the particles, and the like. Conversely, by fitting the detected intensity *I_{R}*(*t*) (or *I_{MAX}*, *I_{AV}*, *τ*, etc.) to the predictions of the modeling component, the VRM characterization module 133-2 can determine an extinction coefficient *β* of the VRM. The extinction coefficient *β* can characterize exponential attenuation of the light signal (of a given frequency) with distance *x* travelled in the VRM: *I*(*x*) *= I*(*0*)*e*^{-*βx*}, where *I*(*x*) is the initial intensity.

Using the determined extinction coefficient *β* (or other similar parameter(s)), the processing system of the AV can determine the maximum visibility range for various types of targets, such as vehicles, pedestrians, road signs, street lights, buildings and structures, and so on. For example, the maximum visibility range of the lidar(s) 122 can be determined based on the reduction in the returned signal intensity by *e*^{-2*βL*} (compared with a situation when no VRM is present), where *L* is the distance from the lidar transceiver to the target and *2L* is the total distance of the beam travel. Similarly, the maximum visibility range can be determined for camera(s) 129 by taking into account that the amount of light registered by the camera(s) is reduced by the factor *e*^{-*β*₁*L*} (since the optical path of the light detected by the camera has length *L* of travel in only one direction). Note that the extinction coefficient *β*₁ for camera detection can be different from the extinction coefficient *β* for lidar detection (if the two types of devices can use light of different wavelengths).

In some implementations, pulse elongation illustrated in **FIG. 2** can be used as a threshold criterion for identifying the presence of a VRM in the driving environment. For example, once every number of frames (e.g., every several minutes or seconds), one or more transmitted signals 202 can be directed along predetermined (or randomly determined) directions in space, e.g., relative to the AV. The returned reflected signals 204 can be screened (e.g., by the VRM identification module 133-1) for an indication of VRM features (e.g., pulse elongation).

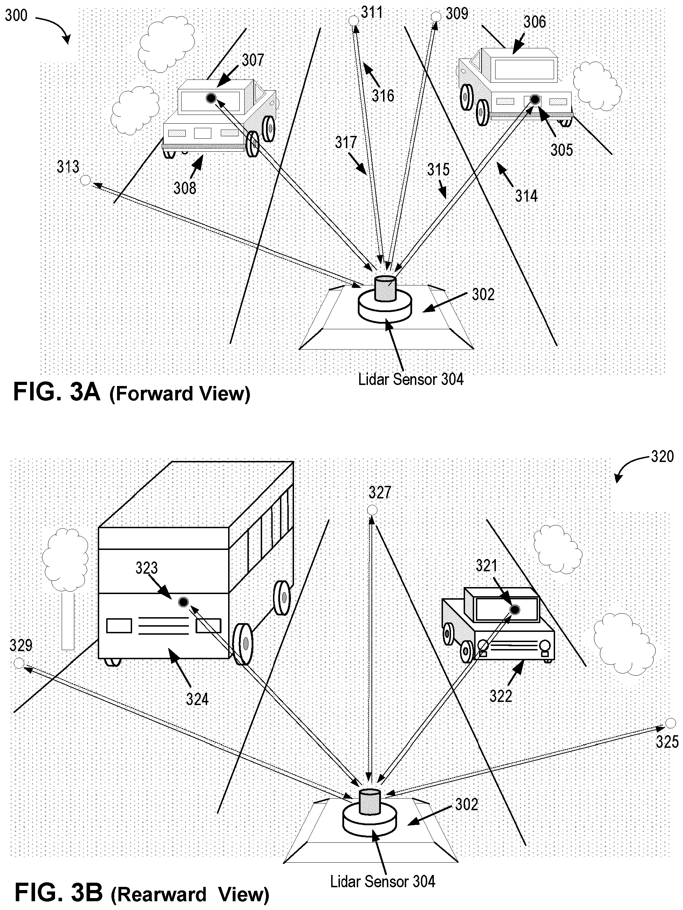

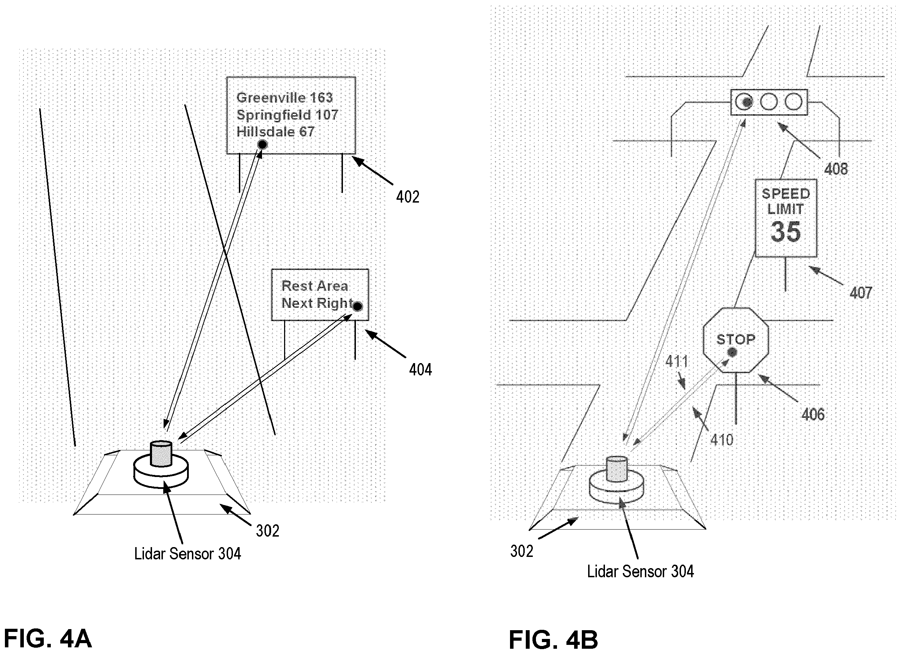

If no pulse elongation (or other VRM features) are detected, the perception system 132 can assume that no VRM is currently present in the driving environment and take no further action. The VRM characterization module 133-2 can remain in a stand-by mode in the meantime. In some implementations, to keep processing costs down, a limited number of VRM-sensing signals (e.g., signals for which analysis of *I_{R}*(*t*) is performed) can be kept low (e.g., several signals per minute or any other time interval). Once an onset identification of the VRM has been made by the VRM identification module 133-1, the number of VRM-sensing signals can be increased, for more detailed monitoring and dynamic characterization of the VRM, as described in more detail below in conjunction with **FIGs 3** and **4**.

**FIGs 3A** and **3B** illustrate schematically lidar-assisted identification and characterization of visibility-reducing media for autonomous driving applications, in accordance with some implementations of the present disclosure. Depicted schematically are various return points rendered by sensing signals of the sensing system of an AV. The return points depicted can be rendered using a single lidar frame or multiple lidar frames. **FIG. 3A** illustrates a forward view 300 from a lidar sensor 304. **FIG. 3B** illustrates a rearward view 320 from the lidar sensor 304. The lidar sensor 304 can be mounted on an autonomous vehicle (e.g**.**, on a roof 302 of the AV, even though the lidar sensor 304 can also be mounted in other locations (e.g., a top of a rearview mirror of a self-driving truck). The lidar sensor 304 can scan the environment by transmitting sensing signals along various directions in space. Every time a detectable signal is reflected and returned to the lidar sensor 304, a return point may be generated. The return point should be understood as any collection of data carried by or encoded in the reflected signal. Such data can include reflected intensity profile *I_{R}*(*t*), transmitted intensity profile *I_{T}*(*t*), distance to the reflecting surface, radial velocity of the reflecting surface, angular coordinates for the direction of the transmitted/reflected beam, and the like.

Black circles are associated with returns from solid objects (object-reflection return points), such as vehicles, buildings, structures, bridges, signs, people, animals, and other objects that have a defined shape. Open circles are associated with returns from VRM (VRM-reflection return points) where a sensing beam does not encounter a reflecting surface within an active range of the lidar transceiver. For example, black circles 305 and 307 in the forward view of **FIG. 3A** correspond to reflections from cars 306 and 308, respectively. Similarly, black circles 321 and 323 in the rearward view of **FIG. 3B** correspond to reflections from a car 322 and a bus 324, respectively. Open circles 309, 311, and 313 correspond to forward-transmitted (e.g., during a first half-period of lidar sensor 304 scanning) sensing signals that scatter/attenuate prior to reaching any solid surface whereas open circles 325, 327, and 329 correspond to rearwardtransmitted (e.g., during a second half-period of scanning) sensing signals. Although only ten return points are illustrated in **FIG. 3A** and **FIG. 3B** for conciseness, many more points (e.g., hundreds or even thousands of points) may be obtained during a single period (or frame) of scanning. Also depicted are transmitted and reflected beams for each of the return points, with reflected beams associated with reflections from VRM depicted with dashed lines. For example, transmitted sensing beam 314 may be reflected from car 306 as reflected beam 315, whereas transmitted sensing beam 316 may be reflected from VRM as reflected beam 317.

The reflected beams associated with object-reflection return points (black circles 305, 307, 321, and 323) as well as the reflected beams associated with VRM-reflection return points (open circles 309, 311, 313, 325, 327, and 329) can be used for VRM identification and classification. As described above in connection with **FIG. 2**, some of the VRM-reflection return points can be used for detection of VRM based on pulse elongation. A different process for VRM identification can be based on intensities of multiple returns collected over a single frame or a number of frames, as further described below. More specifically, even in the absence of information about temporal profiles of reflected beam intensities, VRM-reflection return points are likely to be characterized by a similar maximum or average intensity. This happens because visibility-reducing media, in many instances, possess a significant degree of uniformity. For example, density of a fog often varies on a large distance scale or several kilometers (or even longer) and is approximately uniform over shorter distances of typical lidar visibility. Even when wind or ground terrain cause the fog to have local density non-uniformities, such local variations typically do not clear out the fog completely along any particular direction. Accordingly, it can be detected that multiple return points have intensity (e.g., maximum or average) that is non-zero and substantially the same for multiple directions that significantly differ from each other. At the same time it can be further detected that the intensity is significantly lower than the intensity of typical object-reflection return points. In such instances, a determination can be made that a VRM is present. For example, it can be determined that some return points (e.g., black circles 305, 307, 321, and 323) have different intensities corresponding to reflections from different surfaces located at different distances from the lidar sensor 304. Such returns can be associated with reflections from solid objects (vehicles, buildings, road signs, people, etc.). In contrast, it can be determined that some return points (e.g., open circles 309, 311, 313, 325, 327, and 329) have a much more homogeneous distribution of intensities, e.g., intensities that are above a first threshold intensity *I*₁ (associated with a minimum intensity that distinguishes spurious noise returns from reflections off VRM), but below a second threshold intensity *I*₂ (associated with reflections from physical objects).

Some of the returns identified as corresponding to reflections from VRM can also be used for characterization of the VRM. Based on the intensity of such returns, including maximum intensity *I_{MAX}* and/or average intensity *I_{AV}* or, in some instances, full intensity profile /(*t*)*,* the VRM characterization module 133-2 can determine the type of VRM (e.g., fog, rain, snow, dust, etc.) and the density of the VRM. Additionally, the VRM characterization module 133-2 can determine the visibility of various components of the sensing system 120 (lidars, cameras, etc.) in the presence of the VRM of the determined density.

**FIGs 4A** and **4B** illustrate schematically identification and characterization of visibility-reducing media based on reflections from reference objects, in accordance with some implementations of the present disclosure. **FIG. 4A** depicts road signs 402 and 404 that can be used as reference objects in highway settings. **FIG. 4B** depicts a stop sign 406, a speed limit sign 407, and street lights 408 that can be used as reference objects in urban as well as highway settings. Various other objects that have standardized properties, e.g., surface reflectance, can be used for VRM characterization. More specifically, stop sign 406 can have a recognizable shape (e.g., octagon) that can be classified by reference object classification module 189 based on multiple return points (forming a cluster) that are located in proximity of each other (and, optionally, as having the same velocity relative to the AV). In some implementations, identification that a cluster of points is associated with a particular reference object can be performed using iterative closest points (ICP) algorithms, various methods of clustering, such as K-means clustering, as well as other techniques.

The distance to stop sign 406 (or some other reference object) can be determined from ToF data for transmitted signal 410 and reflected signal 411. The reflectivity of stop sign 406 (or some other reference object) can be stored in a memory of data processing system 130. Based on the stored reflectivity, the distance to the reference object, and the actual detected intensity, the VRM characterization module 133-2 may identify a degree to which VRM has reduced the intensity of the reflected signal 411 compared with a signal that would be detected in the absence of the VRM. Based on the identified degree of reduction, the VRM characterization module 133-2 can determine the density of the VRM and/or the extinction coefficient of light propagation in the VRM. Based on the determined density and/or the extinction coefficient, the VRM characterization module 133-2 can further determine the visibility range for various components (e.g., lidar(s) 122, radar 126, camera(s) 129, etc.) of the sensing system of the AV.

Other reference objects, such as speed limit sign 407 may also have a standardized design and, therefore, known reflectance. It should be understood that examples of reference objects depicted in **FIG. 4A** and **FIG. 4B** are for illustration purposed only and that numerous other reference objects can be used in specific driving environments.

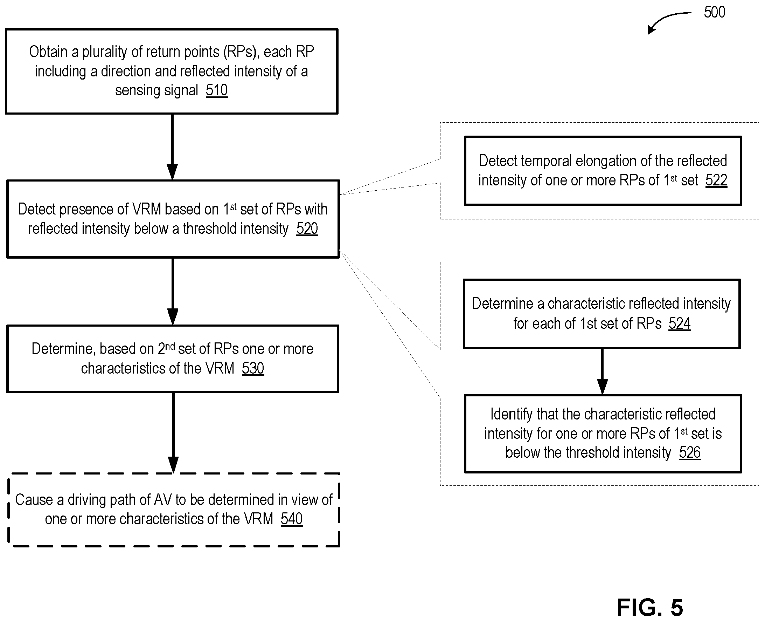

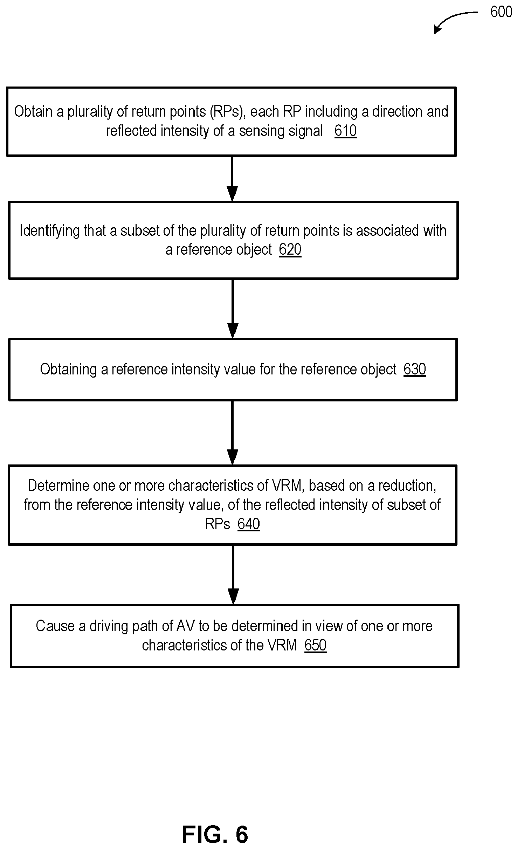

**FIG. 5** and **FIG. 6** depict flow diagrams of example methods 500 and 600 of lidar-assisted identification and characterization of visibility-reducing media in autonomous driving applications, in accordance with some implementations of the present disclosure. Methods 500 and 600 and/or each of their individual functions, routines, subroutines, or operations can be performed by a processing device, having one or more processing units (CPU) and memory devices communicatively coupled to the CPU(s). The processing device executing methods 500 and 600 can perform instructions from various components of the perception system 132 and VRM identification and characterization module 133 (including VRM identification module 133-1 and VRM characterization module 133-2). In certain implementations, methods 500 and 600 can be performed by a single processing thread. Alternatively, methods 500 and 600 can be performed by two or more processing threads, each thread executing one or more individual functions, routines, subroutines, or operations of the method. In an illustrative example, the processing threads implementing methods 500 and 600 can be synchronized (e.g., using semaphores, critical sections, and/or other thread synchronization mechanisms). Alternatively, the processing threads implementing methods 500 and 600 can be executed asynchronously with respect to each other. Various operations of methods 500 and 600 can be performed in a different order compared with the order shown in **FIGs 5** and **6**. Some operations of the methods can be performed concurrently with other operations. Some operations can be optional (as indicated by dashed boxes) in **FIGs 5** and **6**.

**FIG. 5** depicts a flow diagram of an example method 500 of a lidar-assisted identification and characterization of VRM using VRM-reflected returns, in accordance with some implementations of the present disclosure. Method 500 can be directed to systems and components of an autonomous driving vehicle, such as the autonomous vehicle 100 of **FIG. 1A**. Method 500 can be used to improve performance of the autonomous vehicle data processing system 130 and/or the autonomous vehicle control system 140. At block 510, method 500 can include obtaining, by a sensing system of an autonomous vehicle (AV), a plurality of return points. Each return point can include i) a direction of a respective sensing signal emitted by the sensing system and reflected by an outside environment, and ii) a reflected intensity (e.g., *I_{R}*(*t*)) of the respective sensing signal. Obtaining return points can include some or all of the following. One or more sensors (e.g., lidar, FMCW, hybrid ToF/coherent lidar, and so on) of the sensing system of the AV can emit a series of signals (e.g., optical signals). The signals can be emitted in a periodic (cyclic) pattern, e.g. by rotating, pivoting or otherwise scanning transmitters (e.g., through beam steering, etc.), in various directions, e.g., forming the 360-degree panoramic pattern. The signals can strike various solid objects (moving or stationary) and reflect back towards the sensor from various reflecting regions of the objects. The number of reflecting regions can vary depending on the nature, size of the object, and the object's level of occlusion by other objects. The intensity of the reflected signals can depend on the kind (material, surface type, etc.) of the reflecting region, the wavelength of the signal, polarization, etc. When a visibility-reducing medium (VRM), e.g., fog, snow, rain, dust, smoke, etc., is present, some of the reflected signals may be reflected purely by particles of VRM. Additionally, even reflected signals that reflect from solid objects can have intensity that is modified (e.g., reduced) compared with intensity of similar signals reflected by the same objects in the absence of VRM. Based on the characteristics and timing of the reflected signals, the sensing system of the AV can generate (render) a plurality of return points. The return points are data entries that are associated with a reflection of one of the emitted signals from an object of the environment or VRM. The return points can be generated in real time. Each return point can include various data entries, such as a timestamp of a cycle of the sensor, intensity of the returned signals, polarization of the returned signals. Each return point can include two or more coordinates. For example, the coordinates can be a distance to the reflecting region (e.g., determined from the time of flight of the returned signals), and one or more directional angles, such as the azimuthal angle specifying direction within the horizontal plane and the polar angle specifying the elevation above (or below) the horizontal plane. Each return point can further include a velocity value; the velocity value can represent the radial component of the velocity of the reflecting region with respect to the radial direction from a transmitter of the sensing system towards the reflecting region (or the direction from the reflecting region towards a receiver of the sensing system).

The sensor can be a coherent light detection and ranging device (lidar) capable of detecting the radial velocity using, e.g., Doppler-assisted sensing. In some implementations, the coherent lidar can be a frequency-modulated continuous-wave lidar and the signals emitted by the sensor can include phase-modulated or frequency-modulated electromagnetic waves. The sensor can also be capable of concurrently emitting various other signals, such as pulsed signals, which can be used for ToF distance measurements. In some embodiments, the sensor can include separate ToF lidar and a coherent lidar, each emitting separate signals that can be synchronized, mixed, and transmitted along the same optical paths. The return points can belong to (e.g., be associated with) various sensing frames corresponding to different scanning cycles of the transmitter(s) of the sensing system.

At block 520, a processing device performing method 500 can detect presence of a VRM in the outside environment based on a first set of return points of the plurality of return points. The first set of return points can be identified by excluding one or more return points associated with reflection from solid objects. For example, the reflected intensity of each of the first set of return points can be determined to be lower than a threshold intensity *I*₂ associated with returns from solid objects. For example, the reflected intensity of a particular return point can be associated with VRM once it is determined that the reflected intensity is above noise intensity *I*₁ but below threshold intensity *I*₂. Accordingly, the return points having intensity that is above the threshold intensity *I*₂ can be excluded from the first set of return points. In some implementations, the first set of return points includes at least three return points having directions that differ from each other by at least 10 degrees (20 degrees, 30 degrees, or any other angle). In some implementations, multiple return points within each hemisphere (e.g., forwardfacing and rearward-facing) may be selected into the first set of return points before a detection of a VRM is made or confirmed.

In some implementations, as depicted by the upper blowout section of **FIG. 5** that includes block 522, detecting presence of the VRM in the outside environment can include detecting temporal elongation of the reflected intensity *I_{R}*(*t*) of one or more return points of the first set of return points. A spread of the reflected intensity *I_{R}*(*t*) may be compared with a spread of an intensity of the transmitted sensing signal *I_{T}*(*t*) and if the difference (or ratio) of the spreads exceeds a predetermined threshold value, the return point can be classified as a VRM-reflected return. In some implementations, if a certain number of return points per frame are classified as VRM-reflected returns (e.g., at least three, ten, twenty, or any other predetermined number), the processing device performing method 500 may conclude that a VRM is present in the outside environment.

In some implementations, as depicted by the lower blowout section of **FIG. 5****,** detecting presence of the VRM in the outside environment can include determining, at block 524, a characteristic reflected intensity for each of the first set of return points. The characteristic reflected frequency *I_{CHAR}* can have a reduced amount information compared with the full temporal intensity profile *I_{R}*(*t*). For example, the characteristic reflected intensity *I_{CHAR}* can be a maximum reflected intensity *I_{MAX}* of the corresponding sensing signal, an average reflected intensity *I_{AV}*, a median reflected intensity, a weighed reflected intensity, an integrated reflected intensity (e.g., the total reflected energy registered by the receiver) or some other representation of the full intensity profile *I_{R}*(*t*) in terms of one or more numbers, including any combination thereof.

At block 526, method 500 can continue with the processing device identifying that the characteristic reflected intensity for one or more return points of the first set of return points is below the threshold intensity (e.g., *I*₂). In some implementations, identification that *I_{CHAR} < I*₂ and detection of pulse elongation can be performed for each return point of the first set of return points. In some implementations, however, to save computational time and resources, detection of pulse elongation can be performed for only a portion of the return points of the first set (so that only identification of *I_{CHAR}* < *I*₂ is performed for other points whereas pulse elongation is not examined). In some implementations, each of the first set of return points may have the same reflected intensity, e.g. the same intensity profile *I_{R}*(*t*) or characteristic intensity *I_{CHAR}* that is within a tolerance value *ΔI*, such that the characteristic intensity of various return points of the first set is within the interval [*I_{CHAR}* - *ΔI*/2, *I_{CHAR}* + *ΔI*/2]. The tolerance value can take into account possible directional fluctuations of the density of VRM and can be chosen (e.g., empirically) to ensure that the lower boundary of the interval, *I_{CHAR}* - *ΔI*/2, is above the noise return intensity whereas the upper boundary *I_{CHAR}* + 1/2 is sufficiently below the solid object reflection intensity. This, alone or in conjunction with the intensity elongation, helps to ensure that false positives are excluded from both ends of the detected intensities.

At block 530, a processing device performing method 500 can determine, based on a second set of return points of the plurality of return points, one or more characteristics of the VRM. The terms "first" and "second" should be understood herein as identifiers only not presupposing a specific order of acquisition or processing. In some implementations, the first set of return points (used for identification of the presence of VRM) and the second set of return points (used for characterization of the identified VRM) can be the same. In some implementations, the first set of return points and the second set of return points can be overlapping (e.g., include one or more common return points). In some implementations, the first set of return points and the second set of return points can be non-overlapping (e.g., have no common return points).

In some implementations, determining the one or more characteristics of the VRM is based, at least in part, on the characteristic reflected intensity for each of the second set of return points. More specifically, the one or more characteristics of the VRM comprise a density of the VRM. For example, the density of VRM can be obtained by fitting the value *I_{CHAR}* using a model for attenuation of light in the VRM while using the density of the VRM as a fitting parameter. In some implementations, the fitting may be performed using the full temporal intensity profile of the reflected signal, *I_{R}*(*t*). In some implementations, the one or more characteristics of the VRM include a visibility range (e.g., quantified via an extinction coefficient *β*) for one or more components of the sensing system of the AV. Such components can include lidars, radars, cameras, and the like. Since various components of the sensing system can use light of different wavelengths *λ*, the determined extinction coefficients *β*(λ) pertinent to the ranges of various components can be determined as a function of the wavelength.

At block 540, method 500 can continue with the processing device causing a driving path of the AV to be determined in view of the one or more determined characteristics of the VRM. For example, the perception system of the AV can detect presence of fog in the driving environment and can further determine that camera visibility is 50 meters and that lidar visibility is 75 meters. The perception system can communicate this information to the control system (e.g., the AVCS 140). The control system can use this information for charting a driving path of the AV, including modifying (compared with good visibility conditions) the AV's speed regime, the way the AV stops, brakes, changes lanes, backs up, and the like. The control system can subsequently output instructions to powertrain, brakes, and steering 150, vehicle electronics 160, signaling 170, etc., to ensure that the AV follows the determined driving path.

**FIG.** 6 depicts a flow diagram of an example method 600 of lidar-assisted identification and characterization of VRM using object-reflected returns, in accordance with some implementations of the present disclosure. Method 600, like method 500, can be used to improve performance of the autonomous vehicle data processing system 130 and/or the autonomous vehicle control system 140. At block 610, a processing device performing method 600 can obtain a plurality of return points. Operations of block 610 can be performed similarly to operations of block 510 of method 500. At block 620, method 600 can continue with identifying that a subset of the plurality of return points is associated with a reference object. A reference object can be a road sign, e.g., any information sign, any traffic sign, e.g., regulatory sign (speed limit sign, stop sign, etc.), a traffic light, or any other object with known reflective properties. Identification of the reference object can be performed using lidar return points associated with the reference object, which can be grouped using various methods of clustering and tracked across multiple frames using ICP algorithms. In some implementations, identification of the reference object can be performed using camera(s) of the sensing system, in conjunction with various methods of optical character recognition (e.g., used to identify an object as a traffic/road sign by the words/numerals printed thereon), and so on.

At block 630, method 600 can continue with the processing device obtaining a reference intensity value for the reference object (e.g., by retrieving the reference intensity value from a memory of the data processing system). In some implementations, the reference intensity value can be obtained for the determined distance. More specifically, a distance to the reference object can be determined from lidar data (e.g., time-of-flight data). Based on the known intensity of a transmitted lidar beam and a known reflectivity of the reference object, a reference intensity of the reflected signal can be determined (e.g., by the reference object classification module 189). The reference intensity can be an estimate of the intensity of the reflected beam that would arrive at the lidar receiver under good visibility conditions (e.g., in the absence of the VRM). In some implementations, the reference intensity value can be determined based on the known angle of incidence (and reflection) of the sensing signal on the surface of the reference object with a known reflectivity computed using a bidirectional reflectance distribution function (BRDF) for the surface of the reference object.

At block 640, method 600 can continue with the processing device determining one or more characteristics (e.g., density of the VRM, extinction coefficient, visibility range(s), and the like) of the VRM. For example, the one or more characteristics can be determined based on a reduction, compared with the reference intensity value, of the reflected intensity of various return points of the identified subset of the plurality of return points (e.g., the subset of the return points associated with the reference object). Specifically, the ratio (or difference) of the reference intensity value and the actual observed intensity can be used as a measure of how much additional scattering of the lidar signal occurs due to the presence of the VRM along the optical path of the sensing signal(s). It should be understood that while a single reference object is referenced in conjunction with method 600, any number of visible (to the lidar sensor) reference objects can be used in various implementations. When VRM is obtained using multiple reference objects, methods of statistical analysis (e.g., statistical averaging) can be used for more reliable determination of the characteristics of the VRM. In some implementations, the method of reference objects is combined with the method of VRM-reflection returns, including intensity spread elongation and other techniques, for more accurate estimation of properties of the VRM.

At block 650, method 500 can (similarly to block 540 of method 500) continue with the processing device causing a driving path of the AV to be determined (or modified) in view of the one or more determined characteristics of the VRM.

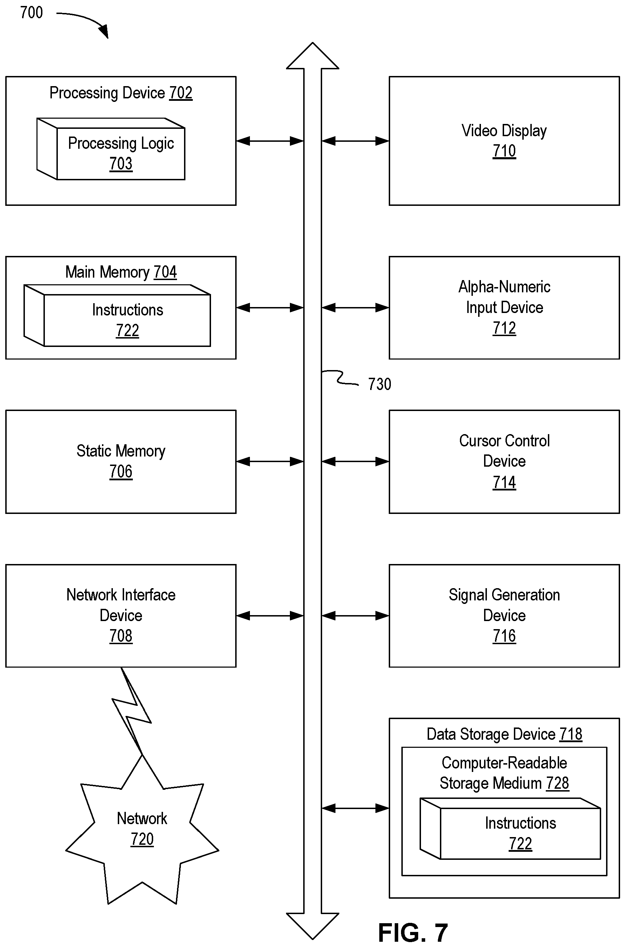

**FIG.** 7 depicts a block diagram of an example computer device 700 capable of enabling lidar-assisted identification and characterization of visibility-reducing media, in accordance with some implementations of the present disclosure. Example computer device 700 can be connected to other computer devices in a LAN, an intranet, an extranet, and/or the Internet. Computer device 700 can operate in the capacity of a server in a client-server network environment. Computer device 700 can be a personal computer (PC), a set-top box (STB), a server, a network router, switch or bridge, or any device capable of executing a set of instructions (sequential or otherwise) that specify actions to be taken by that device. Further, while only a single example computer device is illustrated, the term "computer" shall also be taken to include any collection of computers that individually or jointly execute a set (or multiple sets) of instructions to perform any one or more of the methods discussed herein.

Example computer device 700 can include a processing device 702 (also referred to as a processor or CPU), a main memory 704 (e.g., read-only memory (ROM), flash memory, dynamic random access memory (DRAM) such as synchronous DRAM (SDRAM), etc.), a static memory 706 (e.g., flash memory, static random access memory (SRAM), etc.), and a secondary memory (e.g., a data storage device 718), which can communicate with each other via a bus 730.

Processing device 702 (which can include processing logic 703) represents one or more general-purpose processing devices such as a microprocessor, central processing unit, or the like. More particularly, processing device 702 can be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 702 can also be one or more special-purpose processing devices such as an application specific integrated circuit (ASIC), a field programmable gate array (FPGA), a digital signal processor (DSP), network processor, or the like. In accordance with one or more aspects of the present disclosure, processing device 702 can be configured to execute instructions performing method 500 of a lidar-assisted identification and characterization of VRM using VRM-reflected returns and method 600 of lidar-assisted identification and characterization of VRM using object-reflected returns.

Example computer device 700 can further comprise a network interface device 708, which can be communicatively coupled to a network 720. Example computer device 700 can further comprise a video display 710 (e.g., a liquid crystal display (LCD), a touch screen, or a cathode ray tube (CRT)), an alphanumeric input device 712 (e.g., a keyboard), a cursor control device 714 (e.g., a mouse), and an acoustic signal generation device 716 (e.g., a speaker).

Data storage device 718 can include a computer-readable storage medium (or, more specifically, a non-transitory computer-readable storage medium) 728 on which is stored one or more sets of executable instructions 722. In accordance with one or more aspects of the present disclosure, executable instructions 722 can comprise executable instructions performing method 500 of a lidar-assisted identification and characterization of VRM using VRM-reflected returns and method 600 of lidar-assisted identification and characterization of VRM using object-reflected returns.

Executable instructions 722 can also reside, completely or at least partially, within main memory 704 and/or within processing device 702 during execution thereof by example computer device 700, main memory 704 and processing device 702 also constituting computer-readable storage media. Executable instructions 722 can further be transmitted or received over a network via network interface device 708.

While the computer-readable storage medium 728 is shown in **FIG. 7** as a single medium, the term "computer-readable storage medium" should be taken to include a single medium or multiple media (e.g., a centralized or distributed database, and/or associated caches and servers) that store the one or more sets of operating instructions. The term "computer-readable storage medium" shall also be taken to include any medium that is capable of storing or encoding a set of instructions for execution by the machine that cause the machine to perform any one or more of the methods described herein. The term "computer-readable storage medium" shall accordingly be taken to include, but not be limited to, solid-state memories, and optical and magnetic media.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "identifying," "determining," "storing," "adjusting," "causing," "returning," "comparing," "creating," "stopping," "loading," "copying," "throwing," "replacing," "performing," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Examples of the present disclosure also relate to an apparatus for performing the methods described herein. This apparatus can be specially constructed for the required purposes, or it can be a general purpose computer system selectively programmed by a computer program stored in the computer system. Such a computer program can be stored in a computer readable storage medium, such as, but not limited to, any type of disk including optical disks, CD-ROMs, and magnetic-optical disks, read-only memories (ROMs), random access memories (RAMs), EPROMs, EEPROMs, magnetic disk storage media, optical storage media, flash memory devices, other type of machine-accessible storage media, or any type of media suitable for storing electronic instructions, each coupled to a computer system bus.

The methods and displays presented herein are not inherently related to any particular computer or other apparatus. Various general purpose systems can be used with programs in accordance with the teachings herein, or it may prove convenient to construct a more specialized apparatus to perform the required method steps. The required structure for a variety of these systems will appear as set forth in the description below. In addition, the scope of the present disclosure is not limited to any particular programming language. It will be appreciated that a variety of programming languages can be used to implement the teachings of the present disclosure.

It is to be understood that the above description is intended to be illustrative, and not restrictive. Many other implementation examples will be apparent to those of skill in the art upon reading and understanding the above description. Although the present disclosure describes specific examples, it will be recognized that the systems and methods of the present disclosure are not limited to the examples described herein, but can be practiced with modifications within the scope of the appended claims. Accordingly, the specification and drawings are to be regarded in an illustrative sense rather than a restrictive sense. The scope of the present disclosure should, therefore, be determined with reference to the appended claims, along with the full scope of equivalents to which such claims are entitled.

## Claims

1. A method comprising:
obtaining, using a sensing system of an autonomous vehicle (AV), a plurality of return points, wherein each of the plurality of return points comprises i) a direction of a respective sensing signal emitted by the sensing system and reflected by an outside environment, and ii) a reflected intensity of the respective sensing signal;
detecting presence of a visibility-reducing medium (VRM) in the outside environment based on a first set of return points of the plurality of return points, the reflected intensity of each of the first set of return points being lower than a threshold intensity; and
determining, based on a second set of return points of the plurality of return points, one or more characteristics of the VRM.

2. The method of claim 1, wherein the VRM is at least one of fog, rain, snow, or dust.

3. The method of claim 1 or claim 2, wherein the first set of return points and the second set of return points comprise one or more common return points.

4. The method of any preceding claim, wherein detecting presence of the VRM in the outside environment comprises detecting temporal elongation of the reflected intensity of one or more return points of the first set of return points.

5. The method of any preceding claim, wherein detecting presence of the VRM in the outside environment comprises:
determining a characteristic reflected intensity for each of the first set of return points; and
identifying that the characteristic reflected intensity for one or more return points of the first set of return points is below the threshold intensity, and optionally wherein the characteristic reflected intensity is one of a maximum reflected intensity of a corresponding sensing signal or an average reflected intensity of the corresponding sensing signal.

6. The method of any preceding claim, wherein the first set of return points is identified by excluding one or more return points from the plurality of return points, the one or more excluded return points identified as return points associated with reflection from solid objects.

7. The method of any preceding claim, wherein the first set of return points includes at least three return points having directions that differ from each other by at least 10 degrees, and/or wherein each of the first set of return points comprises the same, within a tolerance value, reflected intensity.

8. The method of any preceding claim, wherein determining the one or more characteristics of the VRM is based, at least in part, on a characteristic reflected intensity for each of the second set of return points, wherein the characteristic reflected intensity is one of a maximum reflected intensity for a corresponding return point or an average reflected intensity for the corresponding return point.

9. The method of any preceding claim, wherein the one or more characteristics of the VRM comprise one or more of:
a density of the VRM; and
a visibility range for one or more components of the sensing system of the AV.

10. The method of any preceding claim, further comprising, causing a driving path of the AV to be determined in view of the one or more determined characteristics of the VRM.

11. A method comprising:
obtaining, using a sensing system of an autonomous vehicle (AV), a plurality of return points, wherein each of the plurality of return points comprises i) a direction of a respective sensing signal emitted by the sensing system and reflected by an outside environment, and ii) a reflected intensity of the respective sensing signal;
identifying that a subset of the plurality of return points is associated with a reference object;
obtaining a reference intensity value for the reference object; and
determining one or more characteristics of a visibility-reducing medium (VRM) in the outside environment, based on a reduction, compared with the reference intensity value, of the reflected intensity of each return point of the identified subset of the plurality of return points.

12. The method of claim 11, wherein determining the one or more characteristics of the VRM comprises determining a distance to the reference object, and wherein the reference intensity value is identified for the determined distanceand/or wherein the reference object is a road sign or a traffic sign.

13. A system comprising:
a sensing system of an autonomous vehicle (AV), the sensing system to:
obtain a plurality of return points, wherein each of the plurality of return points comprises i) a direction of a respective sensing signal emitted by the sensing system and reflected by an outside environment, and ii) a reflected intensity of the respective sensing signal; and
a perception system of the AV, the perception system to:
detect presence of a visibility-reducing medium (VRM) in the outside environment based on a first set of return points of the plurality of return points, the reflected intensity of each of the first set of return points being lower than a threshold intensity; and
determine, based on a second set of return points of the plurality of return points, one or more characteristics of the VRM.

14. The system of claim 13, wherein to detect presence of the VRM in the outside environment the perception system is to detect temporal elongation of the reflected intensity of one or more return points of the first set of return points.

15. The system of claim 13, wherein to detect presence of the VRM in the outside environment the perception system is to:
determine a characteristic reflected intensity for each of the first set of return points; and
identify that the characteristic reflected intensity for one or more return points of the first set of return points is below the threshold intensity, and optionally wherein the first set of return points is identified by excluding one or more return points from the plurality of return points, the one or more excluded return points identified as return points associated with reflection from solid objects..
